# EUROPÄISCHE PATENTSCHRIFT

(11) **EP 3 539 769 B1**
(45) Veröffentlichungstag und Bekanntmachung des Hinweises auf die Patenterteilung: **08.09.2021**
(21) Anmeldenummer: 19162844.5
(22) Anmeldetag: 14.03.2019
(51) Int. Cl.: B32B 27/12, B32B 7/02, E04B 1/62

(54) **SPERRBAHN GEGEN FEUCHTIGKEIT**
MOISTURE SEALING WEB
BANDE BARRIÈRE CONTRE L'HUMIDITÉ

(30) Priorität: 15.03.2018 DE 102018002077
(43) Veröffentlichungstag der Anmeldung: 18.09.2019
(73) Patentinhaber: Steinbacher Dämmstoff Gesellschaft m.b.H., 6383 Erpfendorf (AT)
(72) Erfinder: MARQUARDT, Jürgen, 16928 Prizwalk (DE)
(74) Vertreter: Torggler & Hofinger Patentanwälte

(56) Entgegenhaltungen:
- DE-A1- 2 922 242

## Beschreibung

Sperrbahnen kommen an Gebäuden, insbesondere an der Bodenplatte, zwischen Fundament und aufsteigendem Mauerwerk und an Gebäudeaußenflächen vor.

Vorzugsweise werden die Sperrbahnen als Verbundmaterial hergestellt. Verbundmaterialien bestehen aus unterschiedlichen Materialschichten, die miteinander verbunden sind.

Dabei haben die unterschiedlichen Schichten unterschiedliche Aufgaben. Es ist bekannt, Folienschichten zu verwenden, welche die Abdichtung bewirken sollen. Die Folien bestehen üblicherweise aus Kunststoff.

Aus der DE 2922242 ist eine zumindest zweischichtige Abdeckfolie gemäß Oberbegriff des Patentanspruches 1 als Sperrbahn gegen Feuchtigkeit bekannt, die in alle Richtungen leicht streckbar ist, und eine Schicht aus einer synthetischen Maschenware sowie eine Schicht aus einem modifizierten Bitumen aufweist.

Aus der DE202015006488 ist bekannt, mehrlagige Kunststoff-Folien zu verwenden, zum Beispiel aus HDPE (Polyethylen hoher Dichte) und LDPE (Polyethylen niedriger Dichte). Die verschiedenen Kunststoff-Schichten können aufeinander kaschiert oder miteinander verschweißt oder verklebt sein. Auch eine Coextrusion ist möglich.

Bei weitergehenden Anforderungen an die Dichtfunktion können auch Metallfolien (vgl. DE202015006488, DE202015003680) eingesetzt werden, die eine Dampfsperre bewirken. Desgleichen ist bekannt, Textilien als Schutzschichten und Festigkeitsschichten zu verwenden. Dabei kommt es herkömmlich auf die Reißfestigkeit an, so dass auch rein plastische Massen als Dichtung verwendet werden können.

Die Textilschichten dienen nach der DE10342678 dazu, das Verbundmaterial vor Unebenheiten der Oberfläche von Betonschichten zu schützen. Mit den Schutzschichten aus Textil sollen Ausgleichsschichten entbehrlich werden, die auf die Unebenheiten aufgetragen werden.

Die Textilschichten können nach der DE10342720 aus Gewebe, Gewirke, Gelege und/oder Vliesen auf Basis von Fasern aus Polyolefinen, Polyester, Polyamid, Polyurethanen, Polyacrylnitril einschließlich entsprechender Blockcopolymere, Glas und/oder natürlichen Materialien sein, die gegebenenfalls mit Polyolefinen, Polyester, Polyamid, Polyurethanen, Polyacrylnitril einschließlich entsprechender Blockcopolymere, Metall und/oder bitumenhaltigen Materialien imprägniert und/oder kaschiert sein können.

Aus der DE202015003680 ergibt sich zu den Textilschichten folgendes: Die Gewebelage bzw. ein Gewebe ist ein verkreuztes (oder nahezu rechtwinkeliges) Fadensystem aus Längsfäden (Kettfäden) und Querfäden (Schussfäden), bei dem die Fäden in einem bestimmten Rhythmus (Bindung) über und unter den querliegenden Fäden durchgehen. Durch die Bindung des Gewebes bzw. die Verwebung der Fäden untereinander entsteht ein fester Verbund, der eine hohe Reißfestigkeit und Weiterreißfestigkeit der Verbundabdichtung gewährleistet. Bei der Verlegung der Verbundabdichtung können daher mechanische Schäden der Verbundabdichtung verhindert werden, so dass eine dichte Sperre gegen Wasser und Wasserdampf auch bei Belastung während oder nach der Verlegung gewährleistet wird. Vorzugsweise ist die Gewebelage aus einer Naturfaser, Glasfaser oder Kunststofffaser (z.B. Polyester oder Polyethylen) ausgebildet.

Die zumindest eine Gewebelage kann eine Fadendichte in Längsrichtung und/oder Querrichtung zwischen 3-15 Fäden/cm, bevorzugt zwischen 5-10 Fäden/cm, besonders bevorzugt zwischen 3 bis 7 Fäden aufweisen, und zusätzlich oder alternativ einen Gitterabstand in zumindest einer (Gitter-)Richtung aufweisen von maximal 5 mm, bevorzugt maximal 4 mm und besonders bevorzugt maximal 2 mm. Die Angaben zu Fadendichte und Gitterabstand betreffen eine mittlere Fadendichte und einen mittleren Gitterabstand, bei dem eine Herstellungstoleranz zu berücksichtigen ist. Bevorzugt bildet die zumindest eine Gewebelage eine geschlossene oder im Wesentlichen geschlossene Oberfläche bzw. geschlossenes Oberflächenbild aus.

Vorzugsweise weist die zumindest eine Gewebelage ein Flächengewicht von vorzugsweise 20 Gramm pro Quadratmeter bis 150 Gramm pro Quadratmeter, bevorzugt 50 Gramm pro Quadratmeter bis 120 Gramm pro Quadratmeter und besonders bevorzugt 60 Gramm pro Quadratmeter bis 90 Gramm pro Quadratmeter; zum Beispiel weist die Gewebelage ein Flächengewicht von etwa 70 Gramm pro Quadratmeter auf.

Nach der DE202015003680 weist das Verbundmaterial zumindest eine erste und optional eine zweite Schutzlage auf. Die verschiedenen Lagen sollen in dem Verbundmaterial miteinander verbunden werden. Als bevorzugte Verbindung ist angegeben worden: Verkleben, Kaschieren, Aufspritzen, Verschmelzen, Verketten, Schmelzpressen. Die Sperrbahnen werden auf horizontalen Flächen lose verlegt oder auch verklebt. Die Sperrbahnen werden auf vertikalen Flächen üblicherweise befestigt, zum Beispiel verklebt.

Bei jeder Verlegung ist eine faltenfreie Verlegung wichtig, weil an den Falten leicht Leckagen/Undichtigkeiten entstehen.

Außerdem muss bei der Verlegung der Sperrbahnen häufig berücksichtigt werden, dass Leitungen vom Boden oder von Wänden abgehen bzw. aufgehen. In der Regel werden dazu Öffnungen in die Sperrbahnen geschnitten, um die Sperrbahnen über Rohrenden oder Leitungsenden stülpen zu können. Dabei ist Praxis, großzügige Öffnungen in die Sperrbahnen zu schneiden. Aufgrund der großzügigen Öffnungen wird die Verlegung der Sperrbahnen erleichtert. Es entstehen aber auch Spalte zwischen den Rohrenden/Leitungen und der Sperrbahn, weil die Sperrbahn nicht schließend an den Rohrenden und Leitungen anliegen kann.

Es ist bekannt, solche Spalte mit Dichtringen aus nachgiebigem Kunststoff zu verschließen, die über die Rohrenden/Leitungsenden gestülpt werden. Diese Dichtringe besitzen mindestens ein Vielfaches der Dicke des Verbundmaterials. Eine bekannte Ausführungsform hat darüber hinaus die Form eines Stutzens, mit einer Höhe, die annähernd dem halben Durchmesser des Stutzens/Ringes entspricht. Diese Stutzen/Ringe können auch mit einem Gewebe armiert sein. Um an der Berührungsfläche mit dem Rohrende/Leitungsende eine gewünschte Nachgiebigkeit zu erzeugen, sind die Gewebe in den Stutzen/Ringen in einigem Abstand von der Berührungsfläche mit dem Rohrende/Leitung angeordnet. Aufgrund der vorkommenden verschiedenen Rohrenden/ Leitungsenden sind diverse unterschiedliche Dichtringe erforderlich, wenn mit dem System allen vorkommenden Rohrenden/Leitungen Rechnung getragen werden soll.

Der Erfindung liegt die Erkenntnis zugrunde, dass es trotz der Schutzlage zu erheblichen Beschädigungen der Sperrbahn kommen kann. Darüber hinaus ist erkannt worden, dass Sperrbahnen, die nur aus Kunststoff-Folie bestehen, ohne Schutzlage statistisch weniger Beschädigungen als Sperrbahnen mit Schutzlagen aus Textil aufweisen. Das kann Zufall sein. Die Erfindung hat jedoch Zweifel am Zufall entwickelt, weil in einem Gebäudeschaden wegen Feuchtigkeit festgestellt worden ist, dass die allein aus Kunststoff-Folie bestehende Sperrbahn trotz Verlegung auf einem mörtelverunreinigten Untergrund unversehrt geblieben ist. Die Erfindung führt das auf die große Dehnfähigkeit des verwendeten Kunststoffes zurück. Dadurch konnte sich die Sperrbahn dem unebenen Untergrund anpassen ohne zu reißen.

Nach der Erfindung werden Sperrbahnen mit einer textilen Schutzlage dadurch wesentlich verbessert, dass die Textilschicht aus einem thermoplastischen Elastomer besteht, und dass im elastischen Bereich die Textilschicht eine Nachgiebigkeit aufweist, die mindestens 50% der Nachgiebigkeit der Kunststoff-Folie entspricht, gemessen bei gleicher Belastung und gleicher Messlänge/Messfläche in zwei senkrecht zueinander stehenden Richtungen.

Vorzugsweise weist die textile Schutzlage mindestens eine Dehnung von 70% der Dehnung der Kunststoff-Folie, weiter bevorzugt mindestens 80% der Kunststoff-Folie und höchst bevorzugt mindestens 90% der Kunststoff-Folie auf. Je näher die Dehnung der Schutzlage der Dehnung der Kunststoff-Folie kommt, desto besser wird das Nachgiebigkeitsverhalten des Verbundmaterials.

Die Textilschicht aus einem thermoplastischen Elastomer (TPE) kann bevorzugt ein Vlies oder ein Gelege sein. Die thermoplastischen Elastomere sind beispielsweise
- thermoplastische Copolyamide (TPA),
- thermoplastische Polyesterelastomere/Copolyester (TPC),
- thermoplastische Elastomere auf Olefinbasis (TPO) wie PP/EPDM,
- thermoplastische Styrol-Blockcopolymere (TPS), wie SBS, SEBS, SEPS, SEEPS, MBS
- thermoplastische Elastomere auf Urethanbasis (TPU)
- thermoplastische Vulkanisate oder vernetzte Elastomere auf Olefinbasis (TPV).

Solche Vliese können durch Fasern/Filamente gebildet werden, die in Abschnitten wirr übereinander gelegt und leicht miteinander verbunden werden. Die Vliese können auch durch endlose Fasern/Filamente gebildet werden, die in Schlaufen übereinander gelegt werden.

Solche Vliese sind handelsüblich mit einem Flächengewicht von 10 Gramm pro Quadratmeter bis 1000 Gramm pro Quadratmeter.

Vorzugsweise kommen Vliese mit einem Flächengewicht von 190 Gramm pro Quadratmeter zum Einsatz, minus 100 bis plus 50 Gramm pro Quadratmeter,
noch weiter bevorzugt minus 50 bis plus 30 Gramm und höchst bevorzugt minus 30 bis plus 20 Gramm pro Quadratmeter.

Die Kunststoff-Folien bestehen vorzugsweise aus den gleichen Kunststoffen, die bevorzugt für die Vliese vorgesehen sind. Das gleiche gilt für das Flächengewicht der Kunststoff-Folie.

Die Kunststoff-Folie hat überdies vorzugsweise eine Shore-Härte A von 20 bis 80, noch weiter bevorzugt von 40 bis 60.

Die Kunststoff-Folie hat auch eine Shore-Härte D. Diese Härte beträgt vorzugsweise bis 50, noch weiter bevorzugt bis 20.

Die Shore-Härte ist die Eindringtiefe eines zylindrischen Stiftes in den Kunststoff, wenn der Stift mit Federkraft gegen den Kunststoff gedrückt wird. Bei der Messung A wird ein an der Spitze abgeflachter Stift mit einem Durchmesser von 1,25 mm verwendet. Die abgeflachte Spitze hat einen Durchmesser von 0,79 mm. Bei der Messung D ist die Spitze des Stiftes scharf. Für die Ermittlung der Shore-Härte wurde eine Skala eingeführt. Bei einer Shore-Härte von 0 ist die Eindringtiefe des Stiftes 2,5mm. Bei einer Shore-Härte von 100 ist keine Eindringtiefe zu verzeichnen. Zu den Shore-Härte-Werten von 0 bis 100 gehören entsprechende Eindringtiefen von 0 bis 2,5mm.

Da die Temperatur des Kunststoffes erheblichen Einfluss auf die Härte haben, ist die Einhaltung einer vorgeschriebenen Messtemperatur von 23 Grad Celsius wichtig.

Dabei wird die Dehnung vorzugsweise anhand einer streifenförmigen Materialprobe ermittelt, die mit gleicher Zugkraft belastet wird. Die Materialstreifen/Musterstreifen werden dazu zwischen Spannbacken eingespannt, wobei das eine Ende in einem fest angeordneten Spannbackenpaar gehalten wird und das andere Ende von einem beweglichen Spannbackenpaar auf Zug belastet wird. Dabei werden die beweglichen Spannbacken in einer Führung gehalten und durch eine entsprechende Zugkraft belastet. Günstige Verhältnisse ergeben sich mit beweglichen Spannbacken, die unterhalb der fest angeordneten Spannbacken angeordnet sind und an denen das Prüfgewicht angehängt werden kann. Das Prüfgewicht wird vorzugsweise in Abhängigkeit von dem Flächengewicht der Folien-Musterstreifen gewählt, weil Textilien üblicherweise nach dem Flächengewicht angeboten und vertrieben werden. Das Flächengewicht der Folie lässt sich aus dem Gewicht eines beliebigen Folienstückes bestimmen, indem
- das Folienstück gewogen,
- die Fläche gemessen und
- das Gewicht bei Folienstücken, deren Fläche kleiner als ein Quadratmeter ist, auf einen Quadratmeter hochgerechnet wird, oder
- das Gewicht bei Folienstücken, deren Fläche größer als ein Quadratmeter ist, auf einen Quadratmeter heruntergerechnet wird,
- wobei die Fläche die in der Draufsicht (Ansicht des liegenden Folienstückes von oben) ersichtliche Fläche ist.

Der Musterstreifen besitzt vorzugsweise eine Breite von 2 cm und in der Ausgangslage eine freie Länge von 20 cm zwischen den Spannbacken. Die Musterstreifen werden aus der vorgesehenen Kunststoff-Folie und aus dem als Schutzlage vorgesehenen Textil geschnitten.

Es wird die Dehnung des Folienstreifens mit der Dehnung des Textilstreifens verglichen. Bei unterschiedlicher Dehnung wird die Dehnung beider Streifen ins Verhältnis gesetzt. Aus dem Verhältnis lässt sich ablesen, ob die Dehnung des Textils innerhalb der beanspruchten Grenze liegt.

Bei einheitlichem Prüfgewicht ergeben sich bei Prüfstreifen mit größerer Festigkeit geringere Dehnungen. Geringe Dehnungen können den erfindungsgemäßen Dehnungsvergleich aufwendig machen. Auf der anderen Seite können übermäßige Dehnungen, die bei Prüfstreifen mit geringer absoluter Festigkeit anfallen können, auch die Messung und den Vergleich erschweren.

Wahlweise kann durch Anpassung des Prüfgewichtes bei allen Prüfvorgängen ein ähnliches Dehnungsverhalten erzeugt werden, das einen Vergleich der Dehnungswerte erleichtert.

Bei geringem Flächengewicht wird vorzugsweise entsprechend der geringen absoluten Festigkeit des Prüfstreifens ein geringes Prüfgewicht gewählt. Bei größerem Flächengewicht wird vorzugsweise entsprechend der größeren absoluten Festigkeit ein größeres Prüfgewicht gewählt.

Die Kunststoff-Folie kann zur Herstellung einer Sperrbahn in der oben beschriebenen Form einseitig oder beidseitig mit dem vorbeschriebenen Vlies beschichtet werden. Dabei entstehen Verbundmaterialschichten, vorzugsweise mit einer Dicke von 0,2 bis 1 mm, noch weiter bevorzugt mit einer Dicke von 0,4 bis 0,8 mm und höchst bevorzugt von 0,5 bis 0,7 mm.

Diese Sperrbahnen zeigen statistisch weniger Beschädigungen als herkömmliche Bahnen aus Verbundmaterial, weil die häufigste Schadensursache unebene Berührungsflächen der Sperrbahn am Gebäude sind. Immer wieder werden nämlich bei Bauwerken die einfachen Arbeiten wie das Säubern der Berührungsflächen vergessen oder schlampig ausgeführt oder es werden die Berührungsflächen nach dem Säubern im rauen Baubetrieb wieder verschmutzt oder es wird im Falle einer Verklebung der Sperrbahn der Kleber unregelmäßig aufgetragen. An unebenen Berührungsflächen kann die erfindungsgemäße Sperrbahn nachfließen, bevor eine vollständige Einspannung der Sperrbahn zwischen den Bauwerksteilen stattfindet.

Wenn dagegen erst einmal eine Einspannung der Sperrbahn stattgefunden hat, ist ein Nachfließen kaum noch möglich.

Vorteilhafterweise erleichtern die erfindungsgemäßen Sperrbahnen auch die Verlegung. Aufgrund ihrer Dehnfähigkeit können die erfindungsgemäßen Sperrbahnen wahlweise mit engen Öffnungen versehen werden, sodass die Sperrbahnen über ein Rohrende oder ein Leitungsende gezogen werden können und das Rohrende/Leitungsende mit Spannung umschließen.

Alternativ kann die Verlegung in herkömmlicher Weise erfolgen. Die herkömmliche Verlegung sieht das großzügige Ausschneiden von Öffnungen für die Rohrenden und Leitungsenden vor. Die anschließende Verlegung kann wahlweise lose oder durch Verkleben erfolgen. Für die Verklebung der erfindungsgemäßen Sperrbahnen eignen sich auch herkömmliche Fliesenkleber, die eine ausreichende Haftung zum Untergrund entfalten und sich zugleich in dem Vlies der Sperrbahn verkrallen. Wahlweise können bei der Verlegung auch Kleber auf MS-Polymer-Basis Anwendung finden. Diese Kleber härten durch Polymerisation aus. Die Aushärtung benötigt längere Zeit, in Abhängigkeit von der Kleberdicke. Es wird mit einer Aushärtung von wenigen Millimetern in 24 Stunden gerechnet.

Diese Kleber können unter Druck in erheblichem Umfang fließen. Da ist das Nachfließen der Sperrbahn von Vorteil.

Solche Kleber werden von diversen Herstellern angeboten. Dazu gehören "Pattex"-Produkte von Henkel, "Fischer-Fix" von Fischer, "Uhu-Kleber" von Uhu, "Siesta" von Henkel.

Nach der Verlegung der Sperrbahnen können aus noch vorhandenem Bahnenmaterial Stücke ausgeschnitten werden. In die Stücke werden Öffnungen für die Rohrenden bzw. Leitungsenden eingearbeitet. Vorzugsweise geschieht das durch Ausstanzen. Statt verschiedener herkömmlicher Dichtringe als Verbrauchsmaterial müssen dabei nur die Stanzwerkzeuge vorgehalten werden, die sich nicht verbrauchen.

Durch Ausstanzen lassen sich saubere Ränder an den Öffnungen erzeugen. Zugleich werden die Öffnungen so bemessen, dass die Bahnenmaterial-Stücke mit Spannung über die Rohrenden und Leitungsenden gezogen werden können. Danach werden die Bahnenmaterial-Stücke auf der verlegten Sperrbahn verklebt. Die Bahnenmaterial-Stücke sind wesentlich weniger aufwendig als die üblichen Ringe und Stutzen. Außerdem sind die Bahnenmaterial-Stücke auch dort einsetzbar, wo die bekannten Ringe und Stutzen nicht einsetzbar sind. Das ist insbesondere am Übergang vom Boden in eine Wand der Fall. Außerdem kommt das häufig vor, weil die Rohrdurchführungen für Heizungen durch einen Boden regelmäßig wandnah angeordnet sind.

Solche Bahnenmaterial-Stücke sind auch unabhängig davon anwendbar, ob die erfindungsgemäße Sperrbahn vorgesehen ist. Das heißt, solche Bahnenmaterial-Stücke sind auch im Zusammenhang mit anderen Sperrbahnen nützlich.

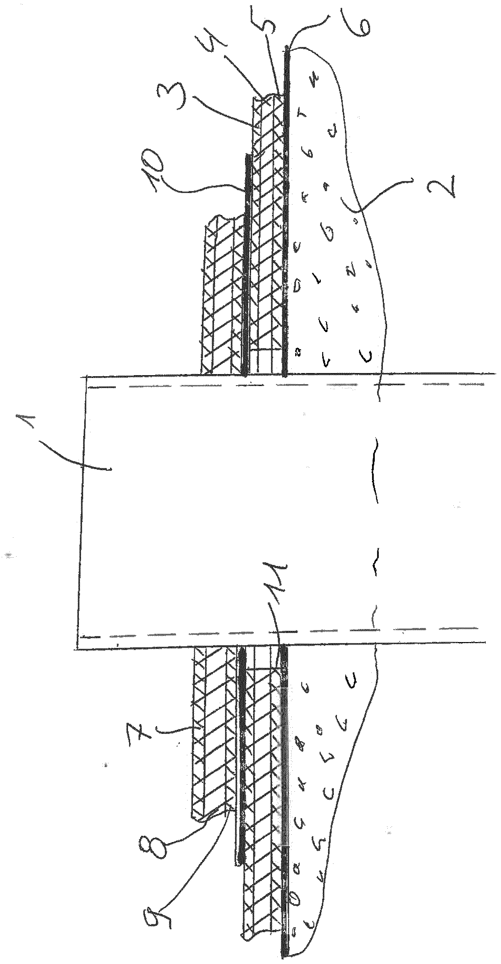

In der Zeichnung ist ein Ausführungsbeispiel der Erfindung dargestellt. Dabei ist mit 1 ein Rohr bezeichnet, das durch eine Betondecke 2 geführt ist. Auf der Betondecke 2 ist eine Sperrbahn verklebt. Die Sperrbahn ist mit einer Schicht 6 aus MS-Polymer-Kleber verklebt.

Die Sperrbahn besteht aus einer Kunststoffschicht 4, die beiderseits mit einer Textilschicht 3 bzw. 5 versehen ist.

Die Kunststoffschicht 4 wird durch eine Folie aus thermoplastischem Elastomer gebildet,
- mit einer Shore-Härte A von 50,
- mit einer Shore-Härte D von 10,
- mit einer zulässigen Dehnung bis 300%
- mit einem Melt-Flow-Index von 25 g/10min/2,16 kg
- mit einem Flächengewicht von 190 Gramm pro Quadratmeter.

Der Melt-Flow-Index (MFI) ist ein Indiz für das Fließverhalten des Kunststoffes. Der MFI wird mittels eines Kapillarrheometers gemessen. Dabei wird der Kunststoff in einem Zylinder aufgeschmolzen und die Schmelze unter einem Druck eines in dem Zylinder verschiebbar angeordneten Kolbens durch eine bestimmte Düse gedrückt. Ermittelt wird die Schmelzemenge, die innerhalb von 10 min austritt. Die Messung erfolgt anhand des Kolbenweges im Zylinder. Die Schmelztemperatur ist vom verwendeten Kunststoff abhängig. Der Druck des Kolbens beträgt im Ausführungsbeispiel 2,16 kg. Die ausgetretene Schmelzemenge 25 Gramm.

Die Textilschichten 3 und 5 bestehen aus Kunststofffaser-Abschnitten, wobei im Ausführungsbeispiel der gleiche Kunststoff wie bei der Folienschicht 4 Anwendung findet. Es handelt sich um Wirr-Faser-Vliese. Die Fasern liegen im Textil wirr aufeinander.

Die Fasern sind im Ausführungsbeispiel zu der Schicht 3 bis 5 warm aufeinander gelegt und gegeneinander gedrückt worden, so dass zwar keine Verschweißung jedoch eine erhebliche Haftung zwischen den Fasern entsteht. Die verschiedenen Schichten sind im Ausführungsbeispiel miteinander verschweißt. Dazu sind die Berührungsflächen mit Heißgas angeschmolzen worden und die Schichten aneinandergedrückt worden.

Die Sperrbahn ist im Ausführungsbeispiel mit einer großzügigen Öffnung 11 versehen, die es leicht macht, die Sperrbahn bei ihrer Verlegung über das Rohr 1 zu stülpen. Die Verlegung der Sperrbahn erfolgt unter gleichzeitiger Verklebung auf dem Untergrund 2. Die Kleberschicht ist mit 6 bezeichnet. Der Kleber ist ein MS-Polymerkleber.

Über der Sperrbahn ist ein Bahnenabschnitt vorgesehen, der durch einen Abschnitt/Ausschnitt einer gleichen Bahn wie die Sperrbahn hergestellt worden ist. Die verschiedenen Schichten sind mit 7, 8, 9 bezeichnet. Die Textilschichten 7 und 9 entsprechen den Schichten 3 und 5. Die Folienschicht 8 entspricht der Folienschicht 4.

Im Ausführungsbeispiel hat der Abschnitt/Ausschnitt eine runde Form und ist der Abschnitt/Ausschnitt mit einer mittigen, kreisförmigen Öffnung versehen. Die Öffnung ist durch Stanzen entstanden. Das Stanzwerkzeug besteht aus einem Schneidring mit einer Schneidkante und einem Widerlager, mit dem die Bahn bzw. der Abschnitt/Ausschnitt beim Ausstanzen der mittigen Öffnung an dieser Stelle unterstützt wird.

Im Ausführungsbeispiel sind die beiden Stanzwerkzeuge auswechselbare Bestandteile einer Presse, nämlich einer Kniehebelpresse.

Das Stanzwerkzeug ist so ausgelegt, dass die Öffnung im Ausführungsbeispiel im Durchmesser um 2 mm kleiner als der Außendurchmesser des Rohres 1 ist. Die kleinere Öffnung führt dazu, dass der Abschnitt/Ausschnitt um das Rohrende dichtend schließt, wenn der Abschnitt/Ausschnitt über das Rohr 1 gezogen wird. Das geschieht unter gleichzeitiger Verklebung mit der Sperrbahn. Die dabei entstehende Kleberschicht ist mit 10 bezeichnet. Der verwendete Kleber ist der gleiche wie der für die Kleberschicht 6 verwendete Kleber.

## Patentansprüche

1. Mehrschichtige Sperrbahn gegen durchdringende Feuchtigkeit, wobei eine Schicht durch eine nachgiebige Kunststoff-Folie (4) gebildet wird, die an mindestens einer Seite mit einer Textilschicht (3, 5) versehen ist, **dadurch gekennzeichnet, dass** die Textilschicht (3, 5) aus einem thermoplastischen Elastomer besteht, und dass im elastischen Bereich die Textilschicht (3, 5) eine Nachgiebigkeit aufweist, die mindestens 50% der Nachgiebigkeit der Kunststoff-Folie (4) entspricht, gemessen bei gleicher Belastung und gleicher Messlänge/Messfläche in zwei senkrecht zueinander stehenden Richtungen.

2. Sperrbahn nach Anspruch 1, **dadurch gekennzeichnet, dass** die Kunststoff-Folie (4) beidseitig mit der Textilschicht (3, 5) versehen ist.

3. Sperrbahn nach Anspruch 1 oder 2, **dadurch gekennzeichnet, dass** die Nachgiebigkeit der Textilschicht (3, 5) mindestens 70%, vorzugsweise mindestens 90% der Nachgiebigkeit der Kunststoff-Folie (4) entspricht.

4. Sperrbahn nach einem der Ansprüche 1 bis 3, **dadurch gekennzeichnet, dass** die Textilschicht (3, 5) ein Vlies oder ein Gelege ist.

5. Sperrbahn nach Anspruch 4, **dadurch gekennzeichnet, dass** das Vlies oder Gelege ein Flächengewicht zwischen 90 g/m² und 240 g/m², vorzugweise zwischen 140 g/m² und 220 g/m² und noch weiter bevorzugt zwischen 160 g/m² und 210 g/m² aufweist.

6. Sperrbahn nach einem der Ansprüche 1 bis 5, **dadurch gekennzeichnet, dass** die Kunststoff-Folie (4) und die Textilschicht (3, 5) aus dem gleichen Kunststoff bestehen.

7. Sperrbahn nach einem der Ansprüche 1 bis 6, **dadurch gekennzeichnet, dass** die mehrschichtige Sperrbahn eine Dicke von 0,2 bis 1mm, vorzugsweise eine Dicke von 0,4 bis 0,8mm und noch weiter bevorzugt eine Dicke von 0,5 bis 0,7mm aufweist.

8. Sperrbahn nach einem der Ansprüche 1 bis 7, **gekennzeichnet durch** eine Verklebung der Sperrbahn mit dem Untergrund (2).

9. Sperrbahn nach Anspruch 8, **gekennzeichnet durch** Verwendung eines MS-Polymer-Klebers.

10. Sperrbahn nach einem der Ansprüche 1 bis 9, **gekennzeichnet durch** Öffnungen (11) mit Übermaß für aufstehende oder abstehende Rohrenden (1) und Leitungsenden.

11. Sperrbahn nach Anspruch 10, **gekennzeichnet durch** Abschnitte/Ausschnitte (7, 8, 9) aus gleichem Material wie die Sperrbahn, in denen kreisförmige Öffnungen mit Untermaß gegenüber den Rohrenden (1) oder Leitungsenden vorgesehen sind, so dass die Abschnitte/Ausschnitte (7, 8, 9) die Rohrenden (1) oder Leitungsenden schließend umfassen, wenn die Abschnitte/Ausschnitte (7, 8, 9) über die Rohrenden (1) oder Leitungsenden gezogen werden, wobei die Abschnitte/Ausschnitte (7, 8, 9) mit der Sperrbahn verklebt sind.

## Claims

1. A multi-layer barrier web to prevent moisture passing therethrough, wherein one layer is formed by a flexible plastic film (4) provided with a textile layer (3, 5) at at least one side, **characterised in that** the textile layer (3, 5) comprises a thermoplastic elastomer and that in the elastic range the textile layer (3, 5) has a flexibility which corresponds to at least 50 % of the flexibility of the plastic film (4) measured under the same loading and with the same measurement length/measurement area in two mutually perpendicular directions.

2. A barrier web according to claim 1 **characterised in that** the plastic film (4) is provided with the textile layer (3, 5) on both sides.

3. A barrier web according to claim 1 or 2 **characterised in that** the flexibility of the textile layer (3, 5) corresponds to at least 70 %, preferably at least 90 %, of the flexibility of the plastic film (4).

4. A barrier web according to one of the claims 1 to 3 **characterised in that** the textile layer (3, 5) is a non-woven fabric or a laid fabric.

5. A barrier web according to claim 4 **characterised in that** the non-woven fabric or laid fabric has a grammage of between 90 g/m2 and 240 g/m2, advantageously between 140 g/m2 and 220 g/m2 and still further preferably between 160 g/m2 and 210 g/m2.

6. A barrier web according to one of the claims 1 to 5 **characterised in that** the plastic film (4) and the textile layer (3, 5) comprise the same plastic.

7. A barrier web according to one of the claims 1 to 6 **characterised in that** the multi-layer barrier web is of a thickness of 0.2 to 1 mm, preferably a thickness of 0.4 to 0.8 mm and still more preferably a thickness of 0.5 to 0.7 mm.

8. A barrier web according to one of the claims 1 to 7 **characterised by** gluing of the barrier web to the underlying support surface (2).

9. A barrier web according to claim 8 **characterised by** use of an MS polymer adhesive.

10. A barrier web according to one of the claims 1 to 9 **characterised by** openings (11) with an oversize for upwardly and downwardly extending pipe ends (1) and conduit ends.

11. A barrier web according to claim 10 **characterised by** portions/sections (7, 8, 9) of the same material as the barrier web, in which there are provided circular openings of an undersize in relation to the pipe ends (1) or conduit ends so that the portions/sections (7, 8, 9) closingly surround the pipe ends (1) or conduit ends when the portions/sections (7, 8, 9) are drawn over the pipe ends (1) or conduit ends, wherein the portions/sections (7, 8, 9) are glued to the barrier web.

## Revendications

1. Bande barrière multicouches contre l'humidité pénétrante, dans laquelle une couche est formée par un film plastique élastique (4), lequel est prévu avec une couche textile (3, 5) sur au moins une face, **caractérisée en ce que** la couche textile (3, 5) est constituée d'un élastomère thermoplastique, et **en ce que**, dans la zone élastique, la couche textile (3, 5) comporte une élasticité correspondant à au moins 50 % de l'élasticité du film plastique (4), mesurée pour une même contrainte et une même longueur/surface de mesure dans deux directions perpendiculaires l'une par rapport à l'autre.

2. Bande barrière selon la revendication 1, **caractérisée en ce que** le film plastique (4) est prévu doté de la couche textile (3, 5) sur les deux faces.

3. Bande barrière selon la revendication 1 ou 2, **caractérisée en ce que** l'élasticité de la couche textile (3, 5) correspond à au moins 70 %, de préférence à au moins 90 %, de l'élasticité du film plastique (4).

4. Bande barrière selon l'une des revendications 1 à 3, **caractérisée en ce que** la couche textile (3, 5) est un matériau non-tissé ou une natte.

5. Bande barrière selon la revendication 4, **caractérisée en ce que** le matériau non-tissé ou la natte comporte un grammage entre 90 g/m² et 240 g/m², de préférence entre 140 g/m² et 220 g/m² et, plus préférentiellement encore, entre 160 g/m² et 210 g/m².

6. Bande barrière selon l'une des revendications 1 à 5, **caractérisée en ce que** le film plastique (4) et la couche textile (3, 5) sont constitués du même plastique.

7. Bande barrière selon l'une des revendications 1 à 6, **caractérisée en ce que** la bande barrière multicouche comporte une épaisseur de 0,2 à 1 mm, de préférence une épaisseur de 0,4 à 0,8 mm et, plus préférentiellement encore, une épaisseur de 0,5 à 0,7 mm.

8. Bande barrière selon l'une des revendications 1 à 7, **caractérisée par** un collage de la bande barrière au substrat (2).

9. Bande barrière selon la revendication 8, **caractérisée par** l'utilisation d'une colle polymère modifié silane (MS-polymère).

10. Bande barrière selon l'une des revendications 1 à 9, **caractérisée par** des ouvertures (11) avec un surdimensionnement pour des extrémités de tubes (1) et des extrémités de conduits se dressant ou faisant saillie.

11. Bande barrière selon la revendication 10, **caractérisée par** des sections/découpes (7, 8, 9) constituées du même matériau que la bande barrière, dont les ouvertures circulaires sont prévues avec un sous-dimensionnement par rapport aux extrémités de tubes (1) et aux extrémités de conduits, de sorte que les sections/découpes (7, 8, 9) contiennent les extrémités de tubes (1) ou les extrémités de conduits quand les sections/découpes (7, 8, 9) sont tirées sur les extrémités de tubes (1) ou les extrémités de conduits, les sections/découpes (7, 8, 9) étant collées à la bande barrière.
